# EUROPEAN PATENT SPECIFICATION

(11) **EP 2 303 466 B1**
(45) Date of publication and mention of the grant of the patent: **29.05.2013**
(21) Application number: 09785242.0
(22) Date of filing: 17.06.2009
(51) Int. Cl.: B05B 7/24, B05B 15/00

(54) **A CONNECTOR FOR A GRAVITY FEED SPRAY GUN, A GRAVITY FEED SPRAY GUN AND A METHOD OF PREPARING A SPRAY PAINT**
ANSCHLUSSTEIL FÜR EINE SPRITZPISTOLE, SPRITZPISTOLE UND VERFAHREN ZUR VORBEREITUNG EINER SPRITZPISTOLE
CONNECTEUR POUR UN PISTOLET VAPORISATEUR À ALIMENTATION PAR GRAVITÉ, PISTOLET VAPORISATEUR À ALIMENTATION PAR GRAVITÉ, ET PROCÉDÉ DE PRÉPARATION D UNE PEINTURE VAPORISÉE

(30) Priority: 17.06.2008 GB 0811050
(43) Date of publication of application: 06.04.2011
(73) Proprietor: U-POL LTD, Whetstone London N20 0EY (GB)
(72) Inventor: JULIEN, Charles, Great London N20 0EY (GB)
(74) Representative: Gaunt, Thomas Derrick
(86) International application number: PCT/GB2009/050691
(87) International publication number: WO 2010/004305

(56) References cited:
- EP-A- 1 741 493
- WO-A-2008/148887
- WO-A-2009/046806
- GB-A- 290 866
- US-A1- 2007 018 016
- US-B1- 6 698 670

## Description

The present invention relates to a connector for a gravity feed spray gun, to a gravity feed spray gun using such a connector, and to a method of preparing a spray paint.

Conventional spray painting apparatus, which are used for example for spray painting motor vehicles, comprise a spray gun and a paint hopper connected to the gun for feeding paint into the gun. Prior to spraying, the components of the paint (typically a solvent, a pigment, additives and a hardener) have to be measured out precisely and then mixed together in a separate mixing pot. The mixed paint is then poured into the hopper, which is fixed above the spray gun so that the paint is fed into the spray gun under gravity. The spray gun combines paint from the hopper with compressed air from a separate air compressor, which atomises the paint into a fine spray, and directs it to the target surface.

There are various problems with such conventional apparatus. In this connection, the paint components can be hazardous, and/or difficult to handle and mix. Accordingly, it is difficult and time consuming for a user to precisely measure out the exact quantities of the components required, mix the components properly, and then transfer them to the hopper provided on the spray gun. Furthermore, it can be difficult to fill the hopper with paint, as the spray gun must be held in one hand while the paint is poured from the mixing pot into the hopper. Moreover, once the paint has been sprayed, the user must clean the mixing pot, the hopper, and gun itself, before these components can be reused. This can be time consuming.

Accordingly, improvements to this conventional apparatus have included ways to simplify the mixing of the paint components, and the transfer the mixed paint to the hopper. Improvements have also focused on ways to simplify the cleaning of the spray gun after spray painting has been carried out.

In a known apparatus developed to improve on the conventional apparatus described above, the paint is mixed and poured into a liner bag placed inside the hopper. The use of a liner bag means that the hopper does not require cleaning after use, leaving only the spray gun requiring cleaning, which can be achieved by simply flushing a cleaning fluid through the spray gun. Nevertheless, this system still requires the user to measure out the precise quantities of the paint components and mix them, and fill the liner.

GB 290 866 concerns the adjustable control of air and paint conduits in a compressed air painting apparatus and provides an apparatus including a pressure pot, a nozzle and air and paint conduits.

US 2007/018016 concerns a liquid spraying assembly including a reservoir, a venting tube and a spray gun. This document discloses a connector according to the preamble of claim 1.

WO 2008/148887 concerns a self regulating vent for a paint supply vessel and provides a closure lid for closing a reservoir including an air inlet.

WO 2009/046806 concerns a cover for mixing containers for paint spray cans including a ventilation opening.

US 6698670 concerns a friction fit paint cup connection and provides a cover-connector for covering and connecting a fluid supply container to a conduit.

The present invention seeks to address the above problems associated with the above known devices.

According to a first aspect of the present invention there is provided a connector for connecting a paint container according to claim 1.

In this way, the present invention can enable a standard or substantially standard off-the-shelf bottle-type container containing a paint to be directly connected to the spray gun and used to feed paint therefrom into the spray gun. This is because the present invention allows pressure in the container to be equalised as paint is fed into the spray gun. As such, the paint can be dispensed from a standard container which has only a single aperture, i.e. its spout. Consequently, the paint does not need to be transferred into a separate hopper. This is particularly important since it permits the use of a spray paint delivery system in which a container can be supplied with a required quantity of a first paint component(such as solvent, pigment, additives, and/or hardener, or a mixture thereof) already contained therein. The required amount of a second paint component, containing the remaining required component(s) of the paint, can then be simply added to the container. All the components of the paint can then be mixed together by shaking the container. Once the paint has been mixed, the container can then be directly connected to the spray gun. After use, the container can be detached and simply disposed of, leaving only the spray gun requiring cleaning. In this way, mixing of the paint components is simplified, exposure to the paint components is minimised, and the amount of cleaning is reduced. The present invention would also allow a pre-filled, ready mixed container of paint to be directly connected to the spray gun without having to decant the paint into a separate hopper.

According to the present invention, the air feed channel may comprise means for preventing paint from flowing out of the container though the air feed channel. This allows air to flow into the container in use while preventing paint from leaking out through the air feed channel.

According to the present invention, the means for preventing paint flow comprises a one-way valve.

Preferably, the connector may further comprise a tube for defining the air feed channel, the tube extending from the coupling such that, in use, it extends upward through the container's aperture into the container. This allows air to be admitted directly to the air cavity in the container above the paint level to equalise the pressure therein, without air having to pass though the paint. This ensures that paint is smoothly fed into the spray gun.

According to the present invention, the one-way [0012] According to the present invention, the one-way valve comprises: first and second opposing panels, the first panel being flexible and being connected to said second panel at or adjacent its lateral edges, said panels abutting against one another for preventing fluid passing into the tube and being moveable relative to one another into an open position for forming a fluid channel for fluid connection between the tube and the interior of the container; and wherein, in use, when the air pressure in the tube exceeds the air pressure in the interior of the container, said panels move to the open position for opening said fluid channel.

In this way, first and second panels form closed lips which are able to gape open in order to open the fluid channel for equalizing the air pressure inside the container. Once the air pressure is equalised and the flow of paint from the container has stopped, the valve is then able to close under the action of the shape memory of the panel material and the air/fluid pressure acting on the external surfaces of the panels. As will be understood, the valve functions in a similar to a duckbill valve, allowing for smooth feeding of paint into the spray gun, whilst preventing paint from leaking out through the air feed channel. The simple construction employed by the above one-way valve provides a valve which is less prone to clogging, as compared to other one-way valve constructions, such as ball check valves. Furthermore, the simple construction also enables the valve to be manufactured cheaply, permitting the valve to be provided as a detachable, disposable component. This allows the valve to be thrown away and replaced when necessary.

Conveniently, the second panel is flexible. In this way, both the panels are provided as flexible, sheet-like elements, such that the fluid channel, once expanded, forms a tube.

Conveniently, the one-way valve further comprises a connector element provided between said first and second panels for connecting the tube to the fluid channel, wherein said connector element spaces said panels at their end closest to the tube, the panels being configured to taper inwardly towards their end distal to the connector element. In this way, the connector element forms a small cavity at the base of the valve, between the panels, which facilitates the opening of the panels when pressure builds inside the cavity, allowing the fluid channel to form.

Conveniently, the connections between the first and second panels taper inwardly from the end closest to the tube for forming a substantially conical tube when in an open, expanded, position.

In one embodiment, the first and second panels are integrally formed.

Preferably, the first and second panels are formed of a laminated foil.

In a preferred embodiment, the tube is configured such that, in use, it extends into the vertical extremity of the container. This ensures the end of the tube is positioned as far as possible above the level of paint held in the container. That is, when a container full of paint mix is connected to the connector and inverted, initially a small quantity of paint is fed into the spray gun, creating a small air cavity which rises to the most vertical portion of the container. By positioning the tube in the above way, its end extends into this air cavity, allowing the pressure to be equalised as more paint feeds out of the container. This ensures a smooth flow of paint, even when a full container is first used.

The connector may further comprise a filter situated in the paint feed channel. This prevents any impurities or congealed paint in the container or its paint mix from being fed to the spray gun, which could affect the quality of the spray painting.

The valve and/or tube and/or filter may be detachable from the adaptor. Thus the component parts of the spray painting system may be provided and replaced separately.

Conveniently, the coupling comprises a threaded connector for connection to standard or substantially standard threading provided on the container's aperture. This can allow an off-the-shelf, disposable container, to be easily connected to the connector, providing a simple and cost effective system.

According to a second aspect of the present invention there is provided a gravity feed spray gun comprising the connector according to the first aspect of the present invention.

According to a third aspect of the present invention there is provided a method of preparing a spray paint according to claim 14.

Conveniently, said first paint component comprises solvent, pigment, additives and/or hardener. Conveniently, said second paint component comprises solvent, pigment, additives and/or hardener.

An example of the present invention will now be described with reference to the accompanying drawings in which:-
Figures 1A to 1C are a representation of the spray paint delivery system.
Figure 2 is an exploded view of a spray gun and a container that are not part of the present invention;
Figure 3 shows the assembled components of the spray gun and container shown in Figure 2;
Figure 4 shows a cross-sectional view of a container and an adaptor that are not part of the present invention;
Figure 5 is a cross-sectional view of a container and an adaptor that are not part of the invention;
Figure 6 is a cross-sectional view of a container and an adaptor of the invention;
Figure 7 is a cross-sectional view of a container and an adaptor that are not part of the invention;
Figure 8 is an exploded cross sectional view of the embodiment shown in Figure 7;
Figure 9 is a cross-sectional view of the container and adaptor according to the present invention;
Figure 10 shows a cross-sectional view of the one-way valve of the connector of the present invention and as shown in Figure 9; and
Figure 11 shows an end view of the one-way valve shown in Figure 10.

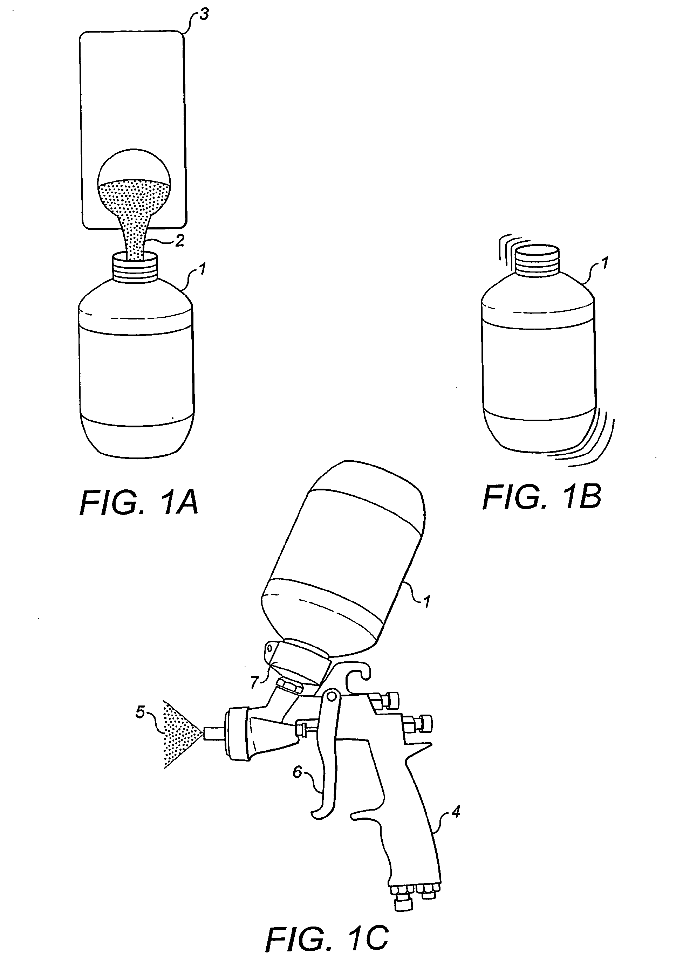

Figures 1A to 1C show a paint system. Referring firstly to Figure 1A, a container 1 itself is a standard or substantially standard off-the-self type container, having a threaded opening which can be closed by means of a standard or substantially standard threaded closure cap. In this system, the container 1 is supplied with the required amount of a first paint component already contained therein, which may include one or more of a solvent, pigment, additives, or hardener. In order to prepare the paint for use, this first paint component must be mixed with a second paint component 2 which is stored in a separate container 3. To ensure that the correct amounts of the components of the paint are mixed, a fill line is provided on the container 1 at a predetermined level such that, when a user fills the container with the second paint component to the fill line, the correct ratio of solvent, pigment, additives and hardener is provided. In this embodiment, the fill line is the base of the neck of the container, so that the container can simply be filled with the second paint component to the neck to ensure the correct ratios of paint components have been added. The container 1 is then closed and shaken to mix the solvent, pigment, additives or hardener, as shown in Figure 1B. The container 1 is then mounted onto a spray gun 4 with the container 1 in an substantially inverted position, as shown in Figure 1C, such that the paint contained therein is fed into the spray *gun 4 under gravity. The system is thus known as a gravity feed system. In order to ensure proper sealing between the container 1 and the spray gun 4, an adaptor 7 is provided which mates to the container 1 and to the spray gun 4, thus providing a fluid connection there between.

The spray gun 4 combines paint from the container 1 with compressed air from a separate air compressor (not shown), which atomises the paint into a fine spray 5 and directs it to the target surface when the handle 6 of the spray gun 4 is depressed.

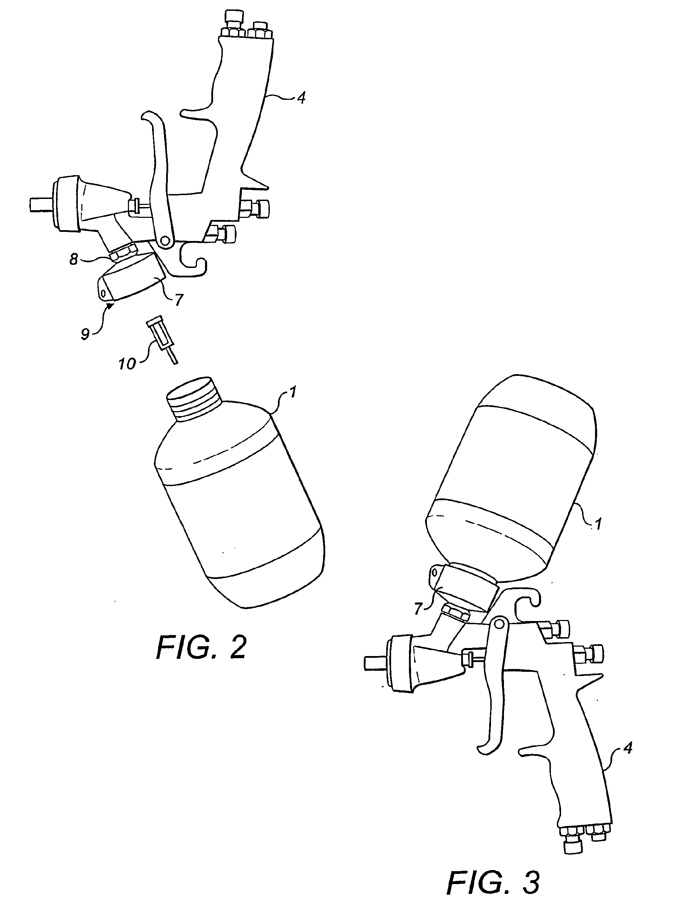

Figure 2 is an exploded view of a spray gun and a container according to an embodiment which is not part of the present invention. The adaptor 7 is connected to the spray gun 4 via a first threaded connection 8, which allows the adaptor to be detached and replaced, if necessary. The adaptor 7 is provided with a second threaded connection 9 into which the opening of the container 1 can be inserted and threaded onto, thereby coupling the container to the spray gun.

A filter 10 is provided in the adaptor 7, such that paint is fed through the adaptor and passes through the filter to ensure that any impurities in the paint or the container do not enter the spray gun, which could affect the spray painting.

Figure 3 shows the arrangement of Figure 2 once assembled and ready for use. The container 1 is mounted onto the spray gun 4 via the adaptor 7, with the container 1 in a substantially inverted position such that the paint contained therein is fed to the spray gun 4 under gravity, via a paint outlet channel, as is discussed in further detail below.

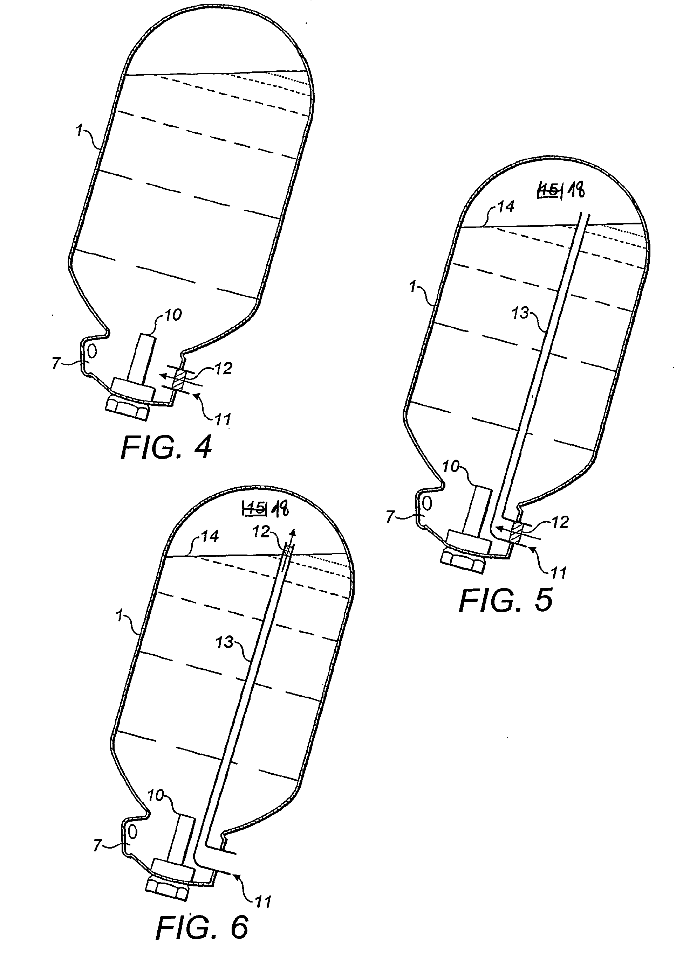

Figure 4 shows a cross section of the adaptor and container shown in the previous figures. The adaptor 7 contains an air inlet 11 for admitting air to the container 1 via an air inlet channel. A one-way valve 12 is located in the inlet 11 to prevent paint from the container 1 undesirably leaking out through the inlet 11. The paint is fed into the spray gun via the filter 10 through an outlet channel (not shown).

The one-way valve 12 allows air to flow in the direction of the arrow A into the container. Accordingly, as paint flows out of the container through the outlet channel, air passes into the container though the one-way valve 12 to equalise the pressure. As such, the paint can flow smoothly into the spray gun.

Figure 5 shows a cross section of an embodiment which is not part of the present invention. This embodiment is similar to the first embodiment discussed above, except that tube 13 is further provided, connected to the air inlet 11. As with the first embodiment, a one-way valve 12 located in the inlet 11, which functions in the same way as the first embodiment described above with reference to Figure 4.

When a container full of paint is first connected to the adaptor 7, the spray gun is inverted (as shown in Figure 2) and tube 13 is lowered into the container 1, through the paint mix. The assembled spray gun and container is inverted, as shown in Figures 3 and 5, so that the tube 13 extends upwardly though the paint and its distal end is above the level of the paint 14 in the container 1. The inclusion of the tube 13 enables air to be admitted directly to the air cavity 18 in the container 1 above the paint level 14. This allows paint to be fed into the spray gun without air having to pass though the paint to enable the pressure in the container to be equalised. This advantageously ensures that paint is smoothly fed into the spray gun, and means that the integrity of the one-way valve is not as critical since paint cannot easily come into contact with the valve.

Figure 6 shows an embodiment which is not part of the present invention which is similar to the second embodiment shown in Figure 5. In this embodiment, however, the one-way valve 12 is located towards the distal end of the tube 13, such that when the system is in use the valve 12 is situated above the paint line 14. This arrangement is particularly preferred as it ensures that tube 13 is kept clear when the tube is first inserted through the paint as the container 1 is connected to the adaptor 7, and when the container is tilted on its side during a spraying operation.

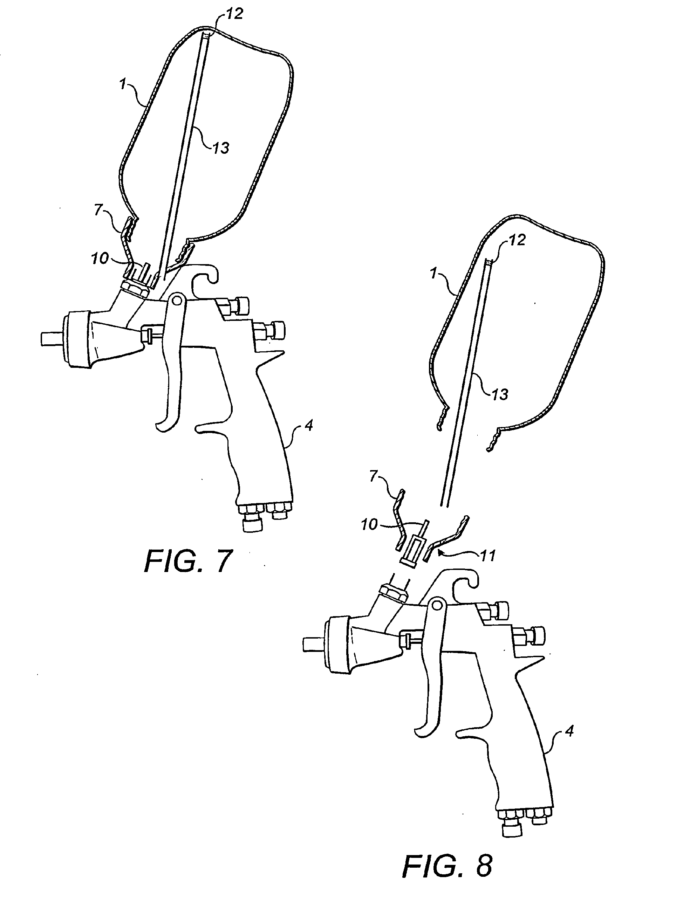

Figure 7 shows an embodiment which is not part the present invention which is similar to the third embodiment shown in Figure 6, with tube 13 forming an air inlet channel and the one-way valve 12 located at the distal end thereof. In this embodiment, however, the inlet 11 and tube 13 is configured, relative to the second threaded connection, such that, when the container 1 is attached, the distal end of the tube 13 extends to the vertical extremity of the container. This ensures that the tube extends fully into the air cavity in the container, which is created as paint from full container flows into the spray gun. Furthermore, by holding the inlet to tube 13 as high as possible above the paint level in the container, contact between the paint and the one-way-valve 12 is avoided. Consequently, a greater amount of paint can be held in the container with air still being admitted to the air cavity.

Figure 8 is an exploded view of the container 1 mounted on the spray gun 4, showing each of the components disassembled. As is evident from Figure 8, the components of the system, namely the gun, the container 1, the adaptor 7, the valve 10, and the tube 13, can be separated from one another allowing the components to be replaced, if necessary.

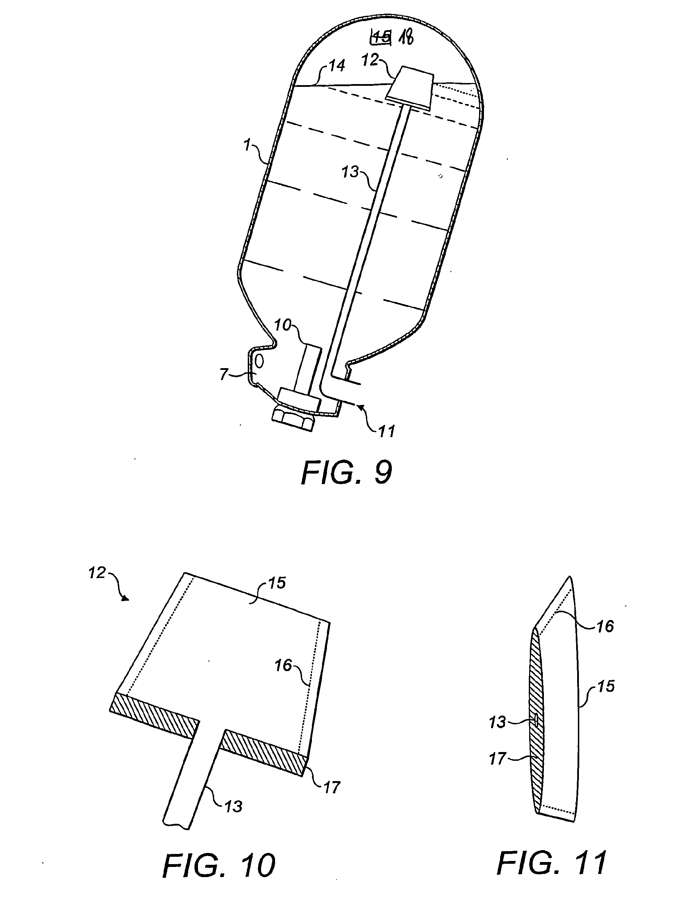

Figure 9 shows the connector the invention which is similar to the embodiment shown in Figure 6. In this embodiment, a disposable one-way valve 12 construction is employed according to an embodiment of the invention, as will be discussed in more detail below.

Figures 10 and 11 respectively show a cross-sectional view and a end view of the one-way valve employed in the shown in Figure 9. The one-way valve 12 comprises two opposing sheet-like panels 15 which are bonded together at their lateral edges by joins 16. Base element 17 is provided bonded between the panels 15 at their bottom edge and provides an aperture into which tube 13 fits for allowing fluid communication between the tube 13 and the cavity formed between the panels by the base element 17. The top edge of the panels 16 remain un-bonded, thereby enabling the panels to separate to form an outlet channel through which air can pass.

The panels 16 are formed of a laminated foil sheet, which comprises a chemical resistant coating layer. This allows the valve to have a good, functional life-span, without suffering from premature degradation by the chemicals in the paint.

Furthermore, the relative stiffness provided by the foil and the laminated construction of this material enables the valve 12 to retain a generally planar shape in use, as is shown in the figures. Moreover, this stiffness also provides a level of shape memory in the panels 15. This, as well as the tapered construction formed by joins 16, helps to maintain the panels 15 in abutment against one another, and assists in returning the panels 15 to this closed position once pressure inside the container 1 has equalised. Moreover, in use, the air/paint pressure in the interior of the container 1 over the external surfaces of the panels 15 further acts to force and maintain the valve closed.

When paint is not flowing from the container 1, the valve remains in closed position, preventing passage of paint into the tube through the open end formed between the top of the panels 15.

When paint flows from the container 1, the fluid pressure in the interior of the container decreases below the external air pressure, and consequently the pressure inside the tube 13. This acts to draw air through the one-way valve 12. The air inside the tube 13 enters the cavity formed between the panels 15, causing the panels 15 to gape, separating them and opening the outlet formed between the top ends of the panels 15. This is shown in Figure 11, which is a top view of one-way valve 12. As can be seen, the panels 15 separate, forming a channel between the panels 15 through which air from the tube 13 can pass into the interior of container 1 to equalise the pressure inside the container. When the flow of paint has stopped and the pressure has been equalised, the panels 15 return to their original shape, thereby closing the valve.

The above construction provides a simple, effective one-way valve. Importantly, as the valve is cheap and simple to manufacture, it allows the valve assembly to be provided as a disposable element. That is, the valve assembly can be attached to the tube 13 via a connection means provided at the aperture on its base 17. After a number of uses, the valve assembly can be detached and replaced. This is useful as one-way valves often clog or otherwise loose their effectiveness over time. Furthermore, within the context of the present application, when a user changes the paint color, they can simply replace the one-way valve, rather than having to clean it.

Moreover, the tall, substantially planar construction of the valve acts to protect the valve when the container is tilted during use. That is, during a spraying operation, it is common for a user to briefly tilt the spay gun on its side when they reach the end of a lateral spray movement to ensure that the side edges of an object have been properly covered in paint. This can result in the valve being dipped into the paint. However, with the above preferred construction, the paint easily slides of the sides of panels 15, reducing the likelihood of clogging and thereby ensuring efficient valve operation.

Although the present invention has been described in the above illustrated embodiments, the present invention is not limited solely to these particular embodiments and various modifications could be envisaged by the skilled person that fall within the scope of the present invention defined by the appended claims.

Furthermore, in the above embodiments, threaded couplings are described between the spray gun and adaptor, and the adaptor and container. However, it will be understood that other couplings, such as press fit or bayonet type couplings, could be used to facilitate connection.

Moreover, in the above embodiments, the adaptor has been described as a separate component from the spray gun, thereby permitting the attachment of the adaptor to a conventional spray gun. However, it will be understood that the adaptor may be formed integrally as part of the spray gun itself. Similarly, the components of the adaptor, such as the tube, filter and valve, may also be formed integrally.

Finally, although in the above examples the paint is formed by mixing a first paint component with a second paint component within the container, it will be understood that the present invention can also be used in conjunction with a container containing a ready mixed quantity of paint. That is, the connector of the present invention can be used to connect a pre-filled and premixed container of paint to a gravity feed spray paint gun.

## Claims

1. A connector for connecting a paint container (1) having an aperture to a gravity feed spray paint gun (4), the connector comprising:
a coupling (7) for connection to the container's aperture and, in use, for mounting the container above the spray gun;
a paint feed channel for feeding paint from the container into the spray gun; and
an air feed channel (11) for feeding air into the container as paint is fed into the spray gun,
**characterised in that** said air feed channel comprises a one-way valve (12) comprising first and second opposing panels (15), the first panel being flexible and being connected to said second panel at or adjacent its lateral edges (16), said panels abutting against one another for preventing paint passing into the air feed channel and being moveable relative to one another into an open position for forming a fluid channel for fluid connection between the air feed channel and the interior of the container; and wherein, in use, when the air pressure in the air feed channel exceeds the pressure in the interior of the container, said panels move to said open position for opening said fluid channel.

2. A connector according to claim 1, wherein the second panel (15) is flexible.

3. A connector according to claim 1 or 2, further comprising a tube (13) for defining the air feed channel (11), the tube extending from the coupling (7) such that, in use, it extends upward through the container's aperture into the container (1).

4. A connector according to claim 3, wherein the one-way valve (12) is located at the end of the tube (13) distal to the connector element.

5. A connector according to claim 3 or 4, wherein the one-way valve (12) further comprises a connector element (17) provided between said first and second panels (15) for connecting the tube (13) to the fluid channel, wherein said connector element spaces said panels at their end closest to the tube, the panels being configured to taper inwardly towards their end distal to the connector element.

6. A connector according to claim 5, wherein the connections between the first and second panels (15) taper inwardly from the end closest to the tube (13) for forming a substantially conical tube when in an open position.

7. A connector according to any preceding claim, wherein the first and second panels (15) are integrally formed.

8. A connector according to any preceding claim, wherein the first and second panels (15) are formed of a laminated foil.

9. A connector according to any one of claims 3 to 6, wherein the tube (13) is configured such that, in use, it extends into the vertical extremity of the container (1).

10. A connector according to any preceding claim, further comprising a filter (10) situated in the paint feed channel.

11. A connector according to any one of claims 3 to 6, or 9 wherein the valve (12) and/or tube (13) are detachable from the connector, or claim 10 wherein the valve (12) and/or filter (10) are detachable from the connector.

12. A connector according to any preceding claim, wherein the coupling (7) comprises a threaded connector (9) for connection to standard or substantially standard threading provided on the container's (1) aperture.

13. A gravity feed spray gun (4) comprising a connector as recited in any preceding claim.

14. A method of preparing a spray paint comprising the steps of:
providing a container (1) with a required amount of a first paint component contained therein;
adding a required amount of a second paint (2) component to the container;
mixing the components in the container;
mounting the container below a gravity feed spray gun (4) using a connector, the connector comprising a coupling (7) for connection to the container's aperture, a paint feed channel for feeding paint from the container into the spray gun, and an air feed channel (11) for feeding air into the container as paint is fed into the spray gun; and
inverting the gun and container ready for spraying;
**characterised in that** said air feed channel comprises a one-way valve (12) comprising first and second opposing panels (15), the first panel being flexible and being connected to said second panel at or adjacent its lateral edges (16), said panels abutting against one another for preventing paint passing into the air feed channel and being moveable relative to one another into an open position for forming a fluid channel for fluid connection between the air feed channel and the interior of the container; and wherein, in use, when the air pressure in the air feed channel exceeds the pressure in the interior of the container, said panels move to said open position for opening said fluid channel.

15. A method of preparing a spray paint according to claim 14 wherein said first paint component and/or said second paint component (2) comprises solvent, pigment, additives and/or hardener.

## Patentansprüche

1. Ein Anschlussstück zum Anschluss eines Farbbehälters (1) mit einer Öffnung an eine Farbspritzpistole mit Schwerkraftzuführung (4), wobei das Anschlussstück Folgendes umfasst:
ein Verbindungsteil (7) zum Anschluss an die Öffnung des Behälters und, in Gebrauch, zur Befestigung des Behälters über der Spritzpistole;
eine Farbzufuhrleitung zur Zufuhr von Farbe vom Behälter in die Spritzpistole; und
eine Luftzufuhrleitung (11) zur Zufuhr von Luft in den Behälter, während die Farbe der Spritzpistole zugeführt wird,
**dadurch gekennzeichnet, dass** die Luftzufuhrleitung ein Einwegventil (12) aufweist, das eine erste und eine zweite gegenüberliegende Platte (15) hat, wobei die erste Platte flexibel ist und mit der genannten zweiten Platte an oder bei deren lateralen Kanten (16) verbunden ist, wobei die beiden Platten aneinander angrenzen, um zu vermeiden, dass Farbe in die Luftzufuhrleitung gerät, und relativ zueinander in eine offene Position bewegt werden können, um einen Durchgang zur Flüssigkeitsverbindung zwischen der Luftzufuhrleitung und dem Innern des Behälters zu bilden; und wobei, in Gebrauch, wenn der Luftdruck in der Luftzufuhrleitung den Druck den Behälterinnern überschreitet, sich die genannten Platten in die genannte offene Position bewegen, um die genannte Flüssigkeitsleitung zu öffnen.

2. Ein Anschlussstück entsprechend Anspruch 1, wobei die zweite Platte (15) flexibel ist.

3. Ein Anschlussstück entsprechend Anspruch 1 oder 2, zu dem weiterhin ein Schlauch (13) gehört, der die Luftzufuhrleitung (11) definiert, wobei der Schlauch so vom Verbindungsteil (7) verläuft, dass er im Gebrauch nach oben durch die Behälteröffnung in den Behälter (1) führt.

4. Ein Anschlussstück entsprechend Anspruch 3, wobei das Einwegventil (12) sich am Ende des Schlauchs (13) distal zum Anschlusselement befindet.

5. Ein Anschlussstück entsprechend Anspruch 3 oder 4, wobei zum Einwegventil (12) weiterhin ein Anschlusselement (17) gehört, das zwischen der genannten ersten und zweiten Platte (15) vorgesehen ist, um den Schlauch (13) an die Flüssigkeitsleitung anzuschließen, wobei das genannte Anschlusselement einen Abstand zwischen den genannten Platten an deren Ende, das dem Schlauch am nächsten ist, herstellt, wobei die Platten so konfiguriert sind, dass in Richtung ihres distalen Endes zum Anschlusselement nach innen zulaufen.

6. Ein Anschlussstück entsprechend Anspruch 5, wobei die Anschlüsse zwischen der ersten und zweiten Platte (15) vom Ende, das dem Schlauch (13) am nächsten ist, nach innen zulaufen, um in der offenen Position einen im Wesentlichen konischen Durchgang zu bilden.

7. Ein Anschlussstück entsprechend einem der vorhergehenden Ansprüche, wobei die erste und zweite Platte (15) integral gebildet sind.

8. Ein Anschlussstück entsprechend einem der vorhergehenden Ansprüche, wobei die erste und zweite Platte (15) aus Verbundfolie gebildet sind.

9. Ein Anschlussstück entsprechend einem der Ansprüche 3 bis 6, wobei der Schlauch (13) so konfiguriert ist, dass er im Gebrauch zur vertikalen Extremität des Behälter (1) verläuft.

10. Ein Anschlussstück entsprechend einem der vorhergehenden Ansprüche, zu dem weiterhin ein Filter (10) gehört, der sich in der Farbzufuhrleitung befindet.

11. Ein Anschlussstück entsprechend einem der Ansprüche 3 bis 6 oder 9, wobei das Ventil (12) und/oder der Schlauch (13) vom Behälter abgenommen werden können, oder Anspruch 10, wobei das Ventil (12) und/oder der Filter (10) vom Anschlussstück abgenommen werden können.

12. Ein Anschlussstück entsprechend einem der vorhergehenden Ansprüche, wobei das Verbindungsteil (7) einen Gewindeanschluss (9) aufweist, um an ein standardmäßiges oder im Wesentlichen standardmäßiges Gewinde an der Öffnung des Behälters (1) angeschlossen werden zu können.

13. Eine Spritzpistole mit Schwerkraftzuführung (4) mit einem Anschlussstück entsprechend einem der vorhergehenden Ansprüche.

14. Ein Verfahren zur Vorbereitung einer Sprayfarbe bestehend aus folgenden Schritten:
Bereitstellen eines Behälters (1), in dem eine erforderliche Menge einer ersten Farbkomponente enthalten ist;
Zugeben einer erforderlichen Menge einer zweiten Farbkomponente (2) zum Behälter;
Mischen der Komponenten im Behälter;
Anbringen des Behälters unter eine Spritzpistole (4) mit Schwerkraftzuführung unter Verwendung eines Anschlussstücks bestehend aus einem Verbindungsteil (7) zum Anschluss an die Öffnung des Behälters; einer Farbzufuhrleitung zur Zufuhr von Farbe vom Behälter in die Spritzpistole und einer Luftzufuhrleitung (11) zur Zufuhr von Luft in den Behälter, während die Farbe der Spritzpistole zugeführt wird; und
Umkehren von Pistole und Behälter, um mit dem Sprühen beginnen zu können;
**dadurch gekennzeichnet, dass** die genannte Luftzufuhrleitung ein Einwegventil (12) aufweist, das eine erste und eine zweite gegenüberliegende Platte (15) hat, wobei die erste Platte flexibel ist und mit der genannten zweiten Platte an oder bei deren lateralen Kanten (16) verbunden ist, wobei die beiden Platten aneinander angrenzen, um zu vermeiden, dass Farbe in die Luftzufuhrleitung gerät, und relativ zueinander in eine offene Position bewegt werden können, um einen Durchgang zur Flüssigkeitsverbindung zwischen der Luftzufuhrleitung und dem Innern des Behälters zu bilden; und wobei, in Gebrauch, wenn der Luftdruck in der Luftzufuhrleitung den Druck den Behälterinnern überschreitet, sich die genannten Platten in die genannte offene Position bewegen, um die genannte Flüssigkeitsleitung zu öffnen.

15. Ein Verfahren zur Vorbereitung einer Sprayfarbe entsprechend Anspruch 14, wobei die genannte erste Farbkomponente und/oder die genannte zweite Farbkomponente (2) Lösungsmittel, Pigment, Zusatzstoffe und/oder Härtemittel umfassen.

## Revendications

1. Un connecteur destiné à raccorder un récipient de peinture (1) possédant une ouverture à un pistolet de peinture par pulvérisation à alimentation par gravité (4), le connecteur comprenant :
un couplage (7) destiné à un raccordement à l'ouverture du récipient et, en utilisation, destiné au montage du récipient au-dessus du pistolet de pulvérisation,
un canal d'alimentation en peinture destiné à apporter de la peinture du récipient au pistolet de pulvérisation, et
un canal d'alimentation en air (11) destiné à apporter de l'air dans le récipient à mesure que de la peinture est apportée au pistolet de pulvérisation,
**caractérisé en ce que** ledit canal d'alimentation en air comprend une soupape anti-retour (12) comprenant un premier et un deuxième panneaux opposés (15), le premier panneau étant flexible et étant raccordé audit deuxième panneau au niveau de ou adjacent à ses bordures latérales (16), lesdits panneaux venant en butée l'un contre l'autre de façon à empêcher la peinture de passer dans le canal d'alimentation en air et étant déplaçables l'un par rapport à l'autre vers une position ouverte de façon à former un canal fluidique pour une connexion fluidique entre le canal d'alimentation en air et l'intérieur du récipient, et où, en utilisation, lorsque la pression d'air dans le canal d'alimentation en air dépasse la pression à l'intérieur du récipient, lesdits panneaux se déplacent vers ladite position ouverte de façon à ouvrir ledit canal fluidique.

2. Un connecteur selon la Revendication 1, où le deuxième panneau (15) est flexible.

3. Un connecteur selon la Revendication 1 ou 2, comprenant en outre un tube (13) destiné à définir le canal d'alimentation en air (11), le tube s'étendant à partir du couplage (7) de sorte que, en utilisation, il s'étende vers le haut au travers de l'ouverture du récipient dans le récipient (1).

4. Un connecteur selon la Revendication 3, où la soupape anti-retour (12) se situe au niveau de l'extrémité du tube (13) distale par rapport à l'élément connecteur.

5. Un connecteur selon la Revendication 3 ou 4, où la soupape anti-retour (12) comprend en outre un élément connecteur (17) placé entre lesdits premier et deuxième panneaux (15) de façon à raccorder le tube (13) au canal fluidique, où ledit élément connecteur sépare lesdits panneaux au niveau de leur extrémité la plus proche du tube, les panneaux étant configurés de façon à s'effiler intérieurement vers leur extrémité distale par rapport à l'élément connecteur.

6. Un connecteur selon la Revendication 5, où les connexions entre le premier et le deuxième panneaux (15) s'effilent intérieurement à partir de l'extrémité la plus proche du tube (13) de façon à former un tube sensiblement conique lorsqu'il est dans une position ouverte.

7. Un connecteur selon l'une quelconque des Revendications précédentes, où le premier et le deuxième panneaux (15) sont formés d'un seul tenant.

8. Un connecteur selon l'une quelconque des Revendications précédentes, où le premier et le deuxième panneaux (15) sont formés d'une feuille stratifiée.

9. Un connecteur selon l'une quelconque des Revendications 3 à 6, où le tube (13) est configuré de sorte que, en utilisation, il s'étende dans l'extrémité verticale du récipient (1).

10. Un connecteur selon l'une quelconque des Revendications précédentes, comprenant en outre un filtre (10) situé dans le canal d'alimentation en peinture.

11. Un connecteur selon l'une quelconque des Revendications 3 à 6, ou 9 où la soupape (12) et/ou le tube (13) sont détachables du connecteur, ou selon la Revendication 10 où la soupape (12) et/ou le filtre (10) sont détachables du connecteur.

12. Un connecteur selon l'une quelconque des Revendications précédentes, où le couplage (7) comprend un connecteur fileté (9) destiné à un raccordement à un filetage standard ou sensiblement standard placé sur l'ouverture du récipient (1).

13. Un pistolet de pulvérisation à alimentation par gravité (4) comprenant un connecteur selon l'une quelconque des Revendications précédentes.

14. Un procédé de préparation d'une peinture par pulvérisation comprenant les opérations suivantes :
la fourniture d'un récipient (1) avec une quantité requise d'un premier composant de peinture contenu dans celui-ci,
l'ajout d'une quantité requise d'un deuxième composant de peinture (2) au récipient,
le mélange des composants dans le récipient,
le montage du récipient sous un pistolet de pulvérisation à alimentation par gravité (4) au moyen d'un connecteur, le connecteur comprenant un couplage (7) destiné à un raccordement à l'ouverture du récipient, un canal d'alimentation en peinture destiné à apporter de la peinture du récipient au pistolet de pulvérisation, et un canal d'alimentation en air (11) destiné à apporter de l'air dans le récipient à mesure que de la peinture est apportée au pistolet de pulvérisation, et
l'inversion du pistolet et du récipient prêts à une opération de pulvérisation,
**caractérisé en ce que** ledit canal d'alimentation en air comprend une soupape anti-retour (12) comprenant un premier et un deuxième panneaux opposés (15), le premier panneau étant flexible et étant raccordé audit deuxième panneau au niveau de ou adjacent à ses bordures latérales (16), lesdits panneaux venant en butée l'un contre l'autre de façon à empêcher la peinture de passer dans le canal d'alimentation en air et étant déplaçables l'un par rapport à l'autre vers une position ouverte de façon à former un canal fluidique pour une connexion fluidique entre le canal d'alimentation en air et l'intérieur du récipient, et où, en utilisation, lorsque la pression d'air dans le canal d'alimentation en air dépasse la pression à l'intérieur du récipient, lesdits panneaux se déplacent vers ladite position ouverte de façon à ouvrir ledit canal fluidique.

15. Un procédé de préparation d'une peinture par pulvérisation selon la Revendication 14 où ledit premier composant de peinture et/ou ledit deuxième composant de peinture (2) comprend un solvant, un pigment, des additifs et/ou un durcisseur.
